# EUROPÄISCHE PATENTSCHRIFT

(11) **EP 0 505 888 B1**
(45) Veröffentlichungstag und Bekanntmachung des Hinweises auf die Patenterteilung: **17.01.1996**
(21) Anmeldenummer: 92104531.6
(22) Anmeldetag: 16.03.1992
(51) Int. Cl.: A61C 1/14

(54) **Vorrichtung zum Lösen einer Spannvorrichtung für ein in Rotation versetzbares zahnärztliches Werkzeug**
Chucking device for a rotating dental tool
Dispositif pour relâcher un dispositif de serrage pour un outil de rotation dentaire

(30) Priorität: 28.03.1991 DE 9103866 U
(43) Veröffentlichungstag der Anmeldung: 30.09.1992
(73) Patentinhaber: SIEMENS AKTIENGESELLSCHAFT, D-80333 München (DE)
(72) Erfinder: Hain, Johann, W-6148 Heppenheim-Kirschhausen (DE)

(56) Entgegenhaltungen:
- DE-A- 2 905 484
- DE-A- 3 012 240

## Beschreibung

Die Erfindung bezieht sich auf eine Vorrichtung zum Lösen einer Spannvorrichtung für ein in Rotation versetzbares zahnärztliches Werkzeug, wobei die Vorrichtung einen federbelasteten Druckdeckel und ein dem Druckdeckel zugeordnetes Kraftübertragungsglied enthält, welches mit einem mit dem Werkzeug rotierenden Auslöseelement der Spannvorrichtung so zusammenwirkt, daß das gleichachsig zur Spannvorrichtung mittels eines Lagers angeordnete Kraftübertragungsglied bei nicht betätigtem Druckdeckel dem Auslöseelement kontaktfrei gegenübersteht und bei Betätigung des Druckdeckels das Auslöseelement axial verschiebt, wodurch die Spannvorrichtung aus einer das Werkzeug festhaltenden Spannstellung in eine das Werkzeug freigebenden Entspannsfellung gebracht wird.

Vorrichtungen dieser Art sind beispielsweise aus DE-2 905 484, DE-3 012 152 und DE-3 040 537 bekannt. Nachteilig bei diesen bekannten Vorrichtungen ist, daß bei Fehlbetätigungen, insbesondere bei nur leichtem Andrücken auf den Druckdeckel und noch rotierendem Werkzeug infolge der Relativbewegung zwischen Kraftübertragungsglied und Auslöseelement an beiden Teilen Abrieb auftritt, der zu einem vorzeitigen Verschleiß der Vorrichtung führt.

Aufgabe der Erfindung ist es, die vorgenannten Nachteile zu beseitigen und eine weitgehend verschleißfreie Druckdeckelbetätigung für die Spannvorrichtung zu erzielen.

Erfindungsgemäß wird dies bei einer Vorrichtung der eingangs genannten Gattung dadurch erzielt, daß das Kraftübertragungselement gleichachsig zur Spannvorrichtung mittels eines Lagers drehbar am Druckdeckel gelagert ist. Als Lagerung kann vorteilhafterweise ein Gleitlager oder ein Kugellager vorgesehen sein. Infolge der Lagerung des Kraftübertragungselementes am Druckdeckel ergibt sich eine praktisch verschleißfreie Druckdeckelbetätigung, weil bei Fehlbetätigungen kein Abrieb zwischen Kraftübertragungsglied und Auslöseelement auftritt. Des weiteren wird ein Ausgleich von Symmetriefehlern zwischen Auslöseelement und Kraftübertragungselement erzielt. Dadurch, daß das Lager dem (feststehenden) Druckdeckel zugeordnet ist, werden auch eventuelle Unwuchten vermieden.

Anhand der Zeichnung werden zwei Ausführungsbeispiele der Erfindung beschrieben.

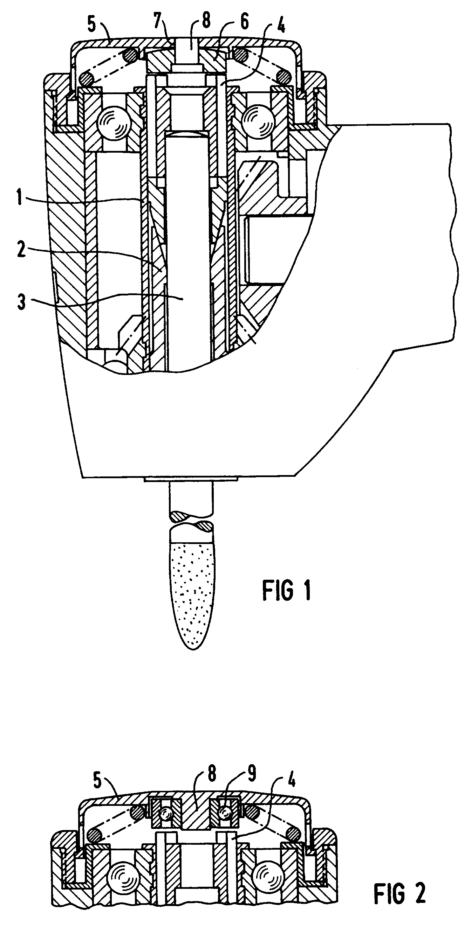

Die Fig. 1 zeigt einen Ausschnitt vom Kopfgehäuse eines zahnärztlichen Handstückes, in dem in bekannter Weise eine in Rotation versetzbare Hohlwelle 1 mittels nicht näher bezeichneter Lager drehbar gelagert ist. In der Hohlwelle 1 ist eine Spannvorrichtung 2 befestigt, die in der gezeichneten Spannstellung den Schaft eines Werkzeuges 3 durch Friktion im Sinne einer Drehmomentübertragung festhält. Die Friktion kann mittels eines Auslöseelementes 4 aufgehoben werden, indem dieses axial in Richtung Werkzeugspitze verschoben wird. Einzelheiten sowie die Funktionsweise der hier gezeichneten Spannvorrichtung sind bekannt. Das axiale Verschieben des Auslöseelementes 4 und damit das Freigeben des Werkzeuges aus der Spannvorrichtung 2 erfolgt durch Betätigung eines federbelasteten Druckdeckels 5, dem ein zentrisch angeordnetes Kraftübertragungsglied 6 zugeordnet ist, welches dem Auslöseelement 4 korrespondierend gegenübersteht, und zwar so, daß bei nichtbetätigtem Druckdeckel das Kraftübertragungsglied 6 dem Auslöseelement 4 kontaktfrei gegenübersteht. In der Spannstellung besteht also keine Berührung zwischen Kraftübertragungsglied 6 und Auslöseelement 4.

Das Kraftübertragungsglied 6 ist mittels eines Gleitlagers 7 an einem gleichachsig zur Spannvorrichtung angeordneten Zapfen 8 drehbar gelagert. Dadurch ergibt sich bei Betätigung des Druckdeckels und noch rotierendem Werkzeug keine Relativbewegung zwischen den Teilen 4 und 6, wodurch die Teile praktisch keinem Verschleiß unterworfen sind. Ein weiterer Vorteil ist darin zu sehen, daß bei Betätigung des Druckdeckels Planlauftoleranzen ausgeglichen werden können und der Arbeitsdruck auf das Auslöseelement 4 stirnseitig gleichmäßig verteilt wird. Selbst bei asymmetrischer Betätigung des Druckdeckels 5 wird die Druckkraft gleichmäßig auf das Auslöseelement 4 übertragen.

Die Fig. 2 zeigt eine Alternativlösung, bei der anstelle eines Gleitlagers ein Kugellager 9 Verwendung findet und das Kugellager 9 selbst das Kraftübertragungsglied bildet. Bei dieser Variante ist der wirksame Teil des Kraftübertragungsgliedes der Außenring des Kugellagers 9. Ein weiterer Unterschied zu der Ausführung nach Fig. 1 ist, daß der Lagezapfen 8 hier integraler Bestandteil des Druckdeckels 5 ist.

## Patentansprüche

1. Vorrichtung zum Lösen einer Spannvorrichtung für ein in Rotation versetzbares zahnärztliches Werkzeug, wobei die Vorrichtung einen federbelasteten Druckdeckel (5) und ein dem Druckdeckel zugeordnetes Kraftübertragungsglied (6, 9) enthält, welches mit einem mit dem Werkzeug (3) umlaufenden Auslöseelement (4) der Spannvorrichtung (2) so zusammenwirkt, daß das gleichachsig zur Spannvorrichtung (2) angeordnete Kraftübertragungslied bei nichtbetätigtem Druckdeckel dem Auslöseelement kontaktfrei gegenübersteht und bei Betätigung des Druckdeckels das Auslöseelement axial verschiebt, wodurch die Spannvorrichtung aus einer das Werkzeug festhaltenden Spannstellung in eine das Werkzeug freigebenden Entspannstellung gebracht wird, **dadurch gekennzeichnet,** daß das Kraftübertragungsglied (6, 9) mittels eines Lagers (7, 9) drehbar am Druckdeckel (5) gelagert ist.

2. Vorrichtung nach Anspruch 2, **dadurch gekennzeichnet,** daß das Kraftübertragungsglied (6) mittels einer Gleitlagerung (7) am Druckdeckel (5) gelagert ist.

3. Vorrichtung nach Anspruch 1, **dadurch gekennzeichnet,** daß das Kraftübertragungsglied (9) mittels eines Kugellagers (9) am Druckdeckel gelagert ist.

4. Vorrichtung nach Anspruch 3, **dadurch gekennzeichnet,** daß das Kugellager (9) selbst das Kraftübertragungsglied bildet.

5. Vorrichtung nach einem der Ansprüche 1 bis 4, **dadurch gekennzeichnet,** daß ein Lagerzapfen (8) zur Aufnahme des Kraftübertragungsgliedes (6, 9) vorgesehen ist und der Lagerzapfen integraler Bestandteil des Druckdeckels (5) ist.

6. Vorrichtung nach einem der Ansprüche 1 bis 4, **dadurch gekennzeichnet,** daß ein Lagerzapfen (8) zur Aufnahme des Kraftübertragungsgliedes (6, 9) vorhanden ist und der Lagerzapfen ein getrenntes, mit dem Druckdeckel (5) jedoch fest verbundenes Bauteil ist.

## Claims

1. Device for releasing a clamping device for a dental tool which can be made to rotate, whereby the device contains a spring-loaded pressure cover (5) and a power transmission element (6, 9) associated with the pressure cover, which element cooperates with a release element (4) of the clamping device (2), the release element rotating with the tool (3), in such a way that the power transmission element, which is arranged coaxially to the clamping device (2), when the pressure cover is not actuated faces the release element in a contactless manner and upon actuation of the pressure cover displaces the release element axially, whereby the clamping device is brought out of a clamping position securing the tool into a release position releasing the tool, characterized in that the power transmission element (6, 9) is rotatably mounted on the pressure cover (5) by means of a bearing (7, 9).

2. Device according to claim 2, characterized in that the power transmission element (6) is mounted on the pressure cover (5) by means of a sliding bearing (7).

3. Device according to claim 1, characterized in that the power transmission element (9) is mounted on the pressure cover by means of a ball bearing (9).

4. Device according to claim 3, characterized in that the ball bearing (9) itself forms the power transmission element.

5. Device according to one of claims 1 to 4, characterized in that a trunnion (8) is provided to receive the power transmission element (6, 9) and the trunnion is an integral component of the pressure cover (5).

6. Device according to one of claims 1 to 4, characterized in that a trunnion (8) is present to receive the power transmission element (6, 9) and the trunnion is a separate component, but firmly connected to the pressure cover (5).

## Revendications

1. Dispositif destiné à ce qu'un dispositif de serrage d'outil de dentisterie pouvant être mis en rotation desserre l'outil, le dispositif comprenant un couvercle (5) à pression soumis à l'action d'un ressort et un organe (6, 9) de transmission de force qui est associé au couvercle à pression, et qui coopère avec un élément (4) de déclenchement, qui tourne avec l'outil (3), du dispositif de serrage (2) de telle sorte que l'organe de transmission de force disposé coaxialement par rapport au dispositif de serrage (2) soit en face de l'élément de déclenchement sans qu'il y ait contact lorsque le couvercle à pression n'est pas actionné et qu'il repousse axialement l'élément de déclenchement lorsque le couvercle à pression est actionné, ce qui fait passer le dispositif de serrage d'une position de serrage maintenant l'outil à une position de desserrage libérant l'outil, caractérisé par le fait que l'organe (6, 9) de transmission de force est monté de manière rotative sur le couvercle (5) à pression au moyen d'un palier (7).

2. Dispositif selon la revendication 2, caractérisé par le fait que l'organe (6) de transmission de force est monté sur le couvercle (5) à pression au moyen d'un palier (7) lisse.

3. Dispositif selon la revendication 1, caractérisé par le fait que l'organe (9) de transmission de force est monté sur le couvercle à pression au moyen d'un roulement (9) à billes.

4. Dispositif selon la revendication 3, caractérisé par le fait que le roulement (9) à billes lui-même constitue l'organe de transmission de force.

5. Dispositif selon l'une des revendications 1 à 4, caractérisé par le fait qu'il est prévu un tourillon (8) de réception de l'organe (6, 9) de transmission de force et que le tourillon fait partie intégrante du couvercle (5) à pression.

6. Dispositif selon l'une des revendications 1 à 4, caractérisé par le fait qu'il existe un tourillon (8) de réception de l'organe (6, 9) de transmission de force et que le tourillon est une pièce séparée mais reliée de façon fixe au couvercle (5) à pression.
